# EUROPÄISCHE PATENTSCHRIFT

(11) **EP 2 630 360 B1**
(45) Veröffentlichungstag und Bekanntmachung des Hinweises auf die Patenterteilung: **30.05.2018**
(21) Anmeldenummer: 11790723.8
(22) Anmeldetag: 21.10.2011
(51) Int. Cl.: F02M 55/02, F16K 31/06, F02M 63/02, F02M 63/00

(54) **HOCHDRUCKREGELVENTIL**
HIGH-PRESSURE REGULATING VALVE
VANNE DE RÉGLAGE DE HAUTE PRESSION

(30) Priorität: 21.10.2010 DE 102010049022
(43) Veröffentlichungstag der Anmeldung: 28.08.2013
(73) Patentinhaber: Kendrion (Villingen) GmbH, 78048 Villingen-Schwenningen (DE)
(72) Erfinder: BURKART, Harald, 78054 Villingen-Schwenningen (DE); MAIWALD, Wolfram, 78052 Villingen-Schwenningen (DE); YU, Wei, 71732 Tamm (DE); ZELANO, Frank, 78112 St. Georgen (DE); HEINGL, Ralf, 78054 Villingen-Schwenningen (DE); GERHARD, Stefanie, 88048 Friedrichshafen (DE)
(74) Vertreter: Westphal, Mussgnug & Partner Patentanwälte mbB
(86) Internationale Anmeldenummer: PCT/EP2011/005323
(87) Internationale Veröffentlichungsnummer: WO 2012/052183

(56) Entgegenhaltungen:
- EP-A1- 1 748 240
- DE-A1- 19 700 980
- DE-A1-102004 049 288
- DE-A1-102008 042 801
- JP-A- 2007 040 106
- JP-A- 2010 216 358
- US-A- 4 506 690

## Beschreibung

Die vorliegende Erfindung betrifft ein Hochdruckregelventil gemäß dem Oberbegriff des Patentanspruchs 1.

Derartige Hochdruckregelventile sind aus dem Stand der Technik bspw. zur Druckregelung in Common-Rail Motoren bekannt.

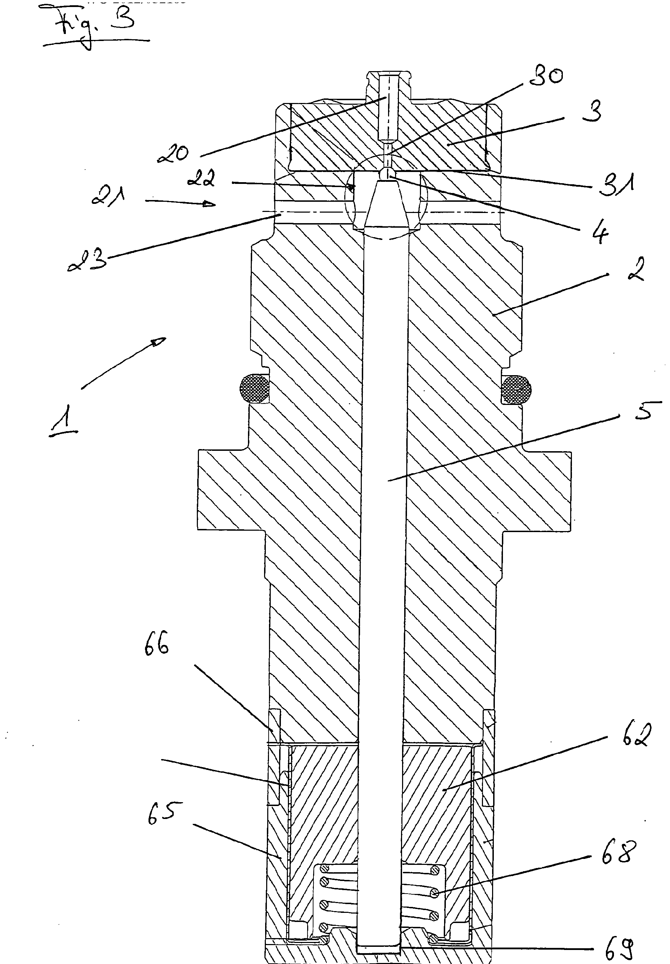

Die Hochdruckregelung von Flüssigkeiten erfolgt im Allgemeinen über Kugelsitzventile. Diese sind in der Regel elektromagnetisch angesteuert. Elektromagnetisch betriebene Hochdruckregelventile aus dem Stand der Technik sind im Allgemeinen wie folgt aufgebaut, ein Beispiel ist in Figur 3 dargestellt.

Das Ventil 1 weist einen Ventilkörper 2 mit einem Einlass 20 und einem Auslass 21 auf, wobei einlassseitig, bspw. im Anwendungsbereich der Common-Rail Motoren, derzeit Drücke bis zu 2400 bar anstehen. Zwischen dem Einlass 20 und dem Auslass 21 ist ein Ventilsitz 3 angeordnet, durch den eine Ventilbohrung 30, die Einlass 20 und Auslass 21 verbindet, geführt ist. Die Ventilbohrung 30 ist auslassseitig durch ein Dichtmittel 4, das in der Regel als Dichtkugel ausgeführt ist, abdichtbar. Die Dichtkugel 4 ist dazu über einen Ventilstift 5 gegen den Ventilsitz 3 pressbar. Der Ventilsitz 3 ist aufgrund der erhöhten Belastungen, die durch die Dichtkugel 4 einwirken, aus gehärtetem Stahl gefertigt. Aus Kostengründen ist der restliche Ventilkörper 2 aus ungehärtetem Material gefertigt.

Der Ventilsitz 3 ist an dem Ventilkörper 2 so angeordnet, dass er die Einlassseite und die Auslassseite verbindet. Der Ventilsitz 3 ist auslassseitig im Wesentlichen plattenförmig ausgestaltet und weist im Bereich der Ventilbohrung 30 eine Vertiefung auf, in der die Dichtkugel 4 zu Liegen kommt. Er ist einlassseitig in den Ventilkörper 2 eingepresst.

Der Auslass 21 ist durch radiale Bohrungen 23 auf der Auslassseite des Ventilkörpers 2 gebildet. Um eine möglichst kompakte Bauform des Hochdruckreglerventils 1 zu erreichen sind die radialen Bohrungen möglichst knapp unterhalb des Ventilsitzes 3 angeordnet. Durch diese Bauart ist zwischen dem Ventilsitz 3 und den Auslassbohrungen 23 ein Absatz 22 gebildet, an dem sich der Ventilsitz 3 bei der Verschraubung des Ventils abstützt.

Der Ventilstift 5 ist in einer Längsbohrung des Ventilkörpers 2 gelagert und über eine auslassseitig angeordnete elektromagnetische Antriebseinheit 6 entlang seiner Längsachse bewegbar. Die Antriebseinheit 6 ist vorliegend nicht dargestellt. Sie ist in der Regel aus einer auf einem Spulenträger 60 angeordneten bestrombaren Spule 61 und einem durch ein erzeugtes Magnetfeld betätigbaren Anker 62 aufgebaut. Der Anker 62 und der Ventilstift 5 sind miteinander verschweißt oder verpresst und so feststehend verbunden. Der Anker 62 ist außerdem in Schließrichtung des Ventils mittels einer Druckfeder 68 vorgespannt, sodass das Ventil in unbestromtem Zustand der Spule 61 geschlossen ist.

Der Anker 62 und die Druckfeder 68 sind rückseitig in einer Buchse 65, die an dem Ventilkörper bspw. über einen Schweißring 66 befestigt ist, gelagert. Der Ventilstift 5 ist in der Buchse 65 über ein Lager 69 zentriert gehalten.

Die Regelung des Fluiddurchflusses erfolgt durch abheben der Dichtkugel 4 von dem Ventilsitz 3. In aktuellen Hochdruckregelventilen 1 beträgt der maximale Hub, d.h. der Hub, der bei maximaler Öffnung des Ventils erreicht wird, 0,2 - 0,5 mm. Beim Öffnen des Ventils, werden aufgrund des von der Einlassseite auf die Dichtkugel 4 wirkenden Druckes sehr hohe Strömungsgeschwindigkeiten der geregelten Flüssigkeit erreicht. Die Flüssigkeit prallt dann mit dieser hohen Strömungsgeschwindigkeit auf den auslassseitigen Absatz 22 des Ventilkörpers 2 und erodiert diesen, d.h. trägt im Verlauf der Lebensdauer des Ventils zunehmend mehr Material des Absatzes 22 ab, sodass dieser in seiner Materialstärke geschwächt wird.

Eine Schwächung des Ventilkörpers 2 in diesem Bereich bedeutet gravierende Nachteile hinsichtlich der Lebensdauer des Ventils, da mit zunehmender Erosion weniger Kräfte aus der Verschraubung über den Ventilsitz 3 auf den Ventilkörper 2 übertragen werden können, sodass das Ventil schlussendlich im Bereich der Pressung undicht wird.

Ein weiterer Nachteil der Erosion ist in dem erfolgenden Materialabtrag zu sehen. Partikel des abgetragenen Materials können in das Kraftstoffsystem gelangen und so bspw. zur Beschädigung der Hochdruckpumpe des Kraftstoffsystems führen.

Außerdem sind aus EP 1 748 240 A1 oder JP 2010-216358 Hochdruckventile bekannt, die einen Ventilsitz mit einem sich von einer Grundfläche axial in Richtung einer Auslassöffnung erstreckenden Fortsatz aufweisen.

Es ist die Aufgabe der vorliegenden Erfindung, bekannte Hochdruckregelventile derart weiterzubilden, dass eine Verwendung bei höheren Drücken von derzeit 2700 - 3000 bar unter gleichzeitiger Verringerung der Materialerosion möglich ist.

Diese Aufgabe wird gelöst durch ein Hochdruckregelventil mit den Merkmalen des Patentanspruchs 1. Vorteilhafte Weiterbildungen sind Gegenstand von Unteransprüchen.

Ein erfindungsgemäßes Hochdruckregelventil weist einen Ventilkörper mit einem Einlass und einem Auslass auf, wobei der Auslass durch wenigstens eine im Wesentlichen radial verlaufende Öffnung in dem Ventilkörper gebildet ist. Ein im Wesentlichen scheibenförmig ausgebildeter Ventilsitz ist an dem Ventilkörper zwischen Einlass und Auslass angeordnet und weist eine Ventilbohrung auf, die den Einlass und den Auslass miteinander verbindet. Es ist außerdem ein Dichtelement vorgesehen, das an einem Betätigungselement geeignet zum dichtenden Verschließen der Ventilbohrung angeordnet ist. Das Betätigungselement ist außerdem über eine Betätigungseinrichtung derart bewegbar, dass ein Öffnen und Schließen des Ventils bewirkbar ist. Der Ventilsitz ist derart ausgestaltet, dass der auslassseitig einen sich von einer Grundfläche des Ventilsitzes axial in Richtung der Öffnung erstreckenden umlaufenden Fortsatz aufweist, so dass beim Öffnen des Ventils ein direktes Anströmen des Ventilkörpers vermieden wird. Der Fortsatz besteht aus gehärtetem Material, wobei der Fortsatz als sich ausgehend von der Ventilbohrung trichterförmig erweiternder Kragen ausgebildet ist, so dass Verwirbelungen in der Strömung reduziert werden. Erfindungsgemäß weist der Fortsatz eine an das Dichtelement angepasste Ausnehmung zur Aufnahme des Dichtelements auf, wobei der Fortsatz wenigstens 9/10 einer Erstreckung zwischen der Grundfläche und der Öffnung abdeckt, so dass ein zwischen der Grundfläche des Ventilsitzes und der Austrittsöffnung liegender Absatz des Ventilkörpers von Materialerosion und von einer damit einhergehenden Schwächung des dort befindlichen Materials verschont wird. Der zwischen dem Ventilsitz und der Austrittsöffnung liegende Absatz stützt den Ventilsitz ab und der Ventilsitz ist in den Ventilkörper eingepresst.

Auf diese Weise wird erreicht, dass ein einlassseitig mit hohem Druck anstehendes Fluid, das beim Öffnen des Ventils durch den beim Öffnungsvorgang im ersten Moment sehr geringer Strömungsquerschnitt mit hoher Geschwindigkeit strömt, entlang des Fortsatzes geleitet wird und damit nicht mit voller Geschwindigkeit auf den sich seitlich erstreckenden Ventilkörper auftrifft. Da der Ventilsitz und damit auch der an dem Ventilsitz angeformte Fortsatz aus gehärtetem Material besteht wird erreicht, dass eine bislang stattfindende Erosion des Ventilkörpers signifikant reduziert wird.

Eine strömungstechnisch günstige Ausgestaltung des Fortsatzes wird erreicht, indem dieser als sich trichterförmig erweisender Kragen ausgebildet ist. Auf diese Weise können Strömungsturbulenzen reduziert werden. Abhängig davon, mit welchem Winkel sich der trichterförmige Kragen erweitert, kann außerdem eine hubabhängige Kennlinie des Strömungsquerschnitts gestaltet werden.

Idealerweise ist die komplette Erstreckung zwischen der Grundfläche und der Öffnung von dem Fortsatz abgedeckt.

Dadurch, dass beim Öffnen des Ventils ein direktes Anströmen des Ventilkörpers vollständig vermieden wird, wird erreicht, dass auch in anderen Bereichen des Ventilkörpers kein Materialabtrag stattfindet und so das Eindringen von Partikeln in den Treibstoffkreislauf vermieden wird.

Da der Fortsatz eine an das Dichtelement angepasste Ausnehmung aufweist, wird eine optimierte Anlagefläche zur Abdichtung zwischen dem Ventilsitz und dem Dichtelement gebildet.

Das Dichtelement ist bevorzugt als Dichtkugel ausgebildet. Das hat den Vorteil, dass durch die rotationssymmetrische Ausgestaltung einer Kugel eine besonders gute Abdichtung in Bezug auf eine Bohrung erfolgen kann.

Eine Betätigung des Dichtelements kann besonders einfach erfolgen, wenn das Betätigungselement als Betätigungsstift ausgebildet ist. Eine stiftförmige Ausgestaltung des Betätigungselements hat den Vorteil, dass dieses auf diese Weise besonders einfach durch den Ventilkörper in Richtung der Betätigungseinrichtung, die beispielsweise als Elektromagnet ausgeführt ist, geführt werden kann.

Indem ein Strömungsquerschnitt zwischen dem Betätigungselement und dem Fortsatz derart ausgestaltet ist, dass Verwirbelung in der Strömung reduziert werden, wird ein besonders regelmäßiger Fluidfluss erreicht und es werden durch Verwirbelungen in den Fluidkreislauf induzierte Kräfte reduziert.

Die Erfindung wird nachfolgend ausführlich unter Bezugnahme auf die beigefügten Figuren erläutert. Es zeigen:
- Figur 1: ein erfindungsgemäßes Hochdruckregelventil im Querschnitt,
- Figur 2: den Ventilsitz des Hochdruckregelventils aus Figur 1 in vergrößerter Darstellung und
- Figur 3: ein Hochdruckregelventil gemäß dem Stand der Technik (schon behandelt).

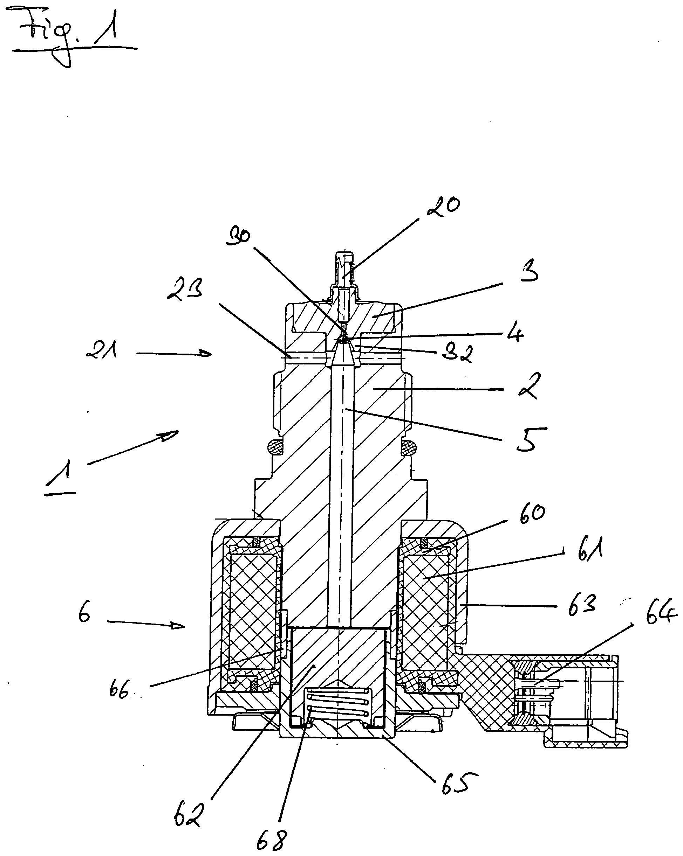

Figur 1 zeigt einen Querschnitt eines erfindungsgemäßen Hochdruckregelventils 1. Das Hochdruckregelventil 1 weist einen im Wesentlichen zylinderförmig ausgestalteten Ventilkörper 2 auf, der einen axial verlaufenden Einlass 20 sowie einen radial verlaufenden Auslass 21 aufweist. Der Auslass 21 ist vorliegend durch radial geführte Bohrungen 23 gebildet. Einlassseitig ist an dem Ventilkörper 2 ein scheibenförmiger Ventilsitz 3 angeordnet, der über eine Ventilbohrung 30 den Einlass 20 und den Auslass 21 verbindet. Der Ventilsitz 3 ist an dem Ventilkörper 2 über eine Pressung gehaltert und wird beim Einbau des Ventils 1 in Richtung des Ventilkörpers 2 verspannt.

Auslassseitig ist die Ventilbohrung 30 durch ein als Dichtkugel ausgestaltetes Dichtelement 4 verschließbar. Die Dichtkugel 4 ist zum Verschließen der Ventilbohrung 30 über ein als Betätigungsstift ausgeformtes Betätigungselement 5, das in einer axial verlaufenden Bohrung des Ventilkörpers 2 gelagert ist, gegen den Ventilsitz 3 pressbar. Der Ventilstift 5 ist über eine Betätigungsanordnung 6, die im vorliegenden Fall als Elektromagnet ausgebildet ist, axial verschiebbar. Der Elektromagnet 6 ist im Wesentlichen aus einer umfänglich zu dem Ventilkörper 2 und auf einem Spulenträger 60 angeordneten Spule 61 sowie einen im Inneren der Spule 61 axial verschiebbar gelagerten Anker 62 aufgebaut und über ein Gehäuse 63 mit dem Ventilkörper 2 verbunden. Eine Bewegung des Ankers 62 in Axialrichtung wird über den Ventilstift 5 auf die Dichtkugel 4 übertragen, so dass ein Öffnen und Schließen des Hochdruckregelventils 1 ermöglicht wird. Der Anker 62 ist zusätzlich in einer Buchse 65 gelagert und in Richtung des Ventilstifts 5 mittels einer Druckfeder 68 vorgespannt. Das Hochdruckregelventil 1 ist dadurch in unbestromten Zustand der Spule 61 bis zu einem Druck, der durch die Federkraft der Druckfeder 68 bestimmt ist, geschlossen. Bei darüber hinausgehenden Drücken ist eine zusätzliche Bestromung der Spule 61 notwendig, um das Hochdruckregelventil 1 gegen einen am Einlass 20 anstehenden Druck geschlossen zu halten.

Eine Bestromung der Spule 61 kann über seitlich nach außen geführte Anschlusskontakte 64 erfolgen.

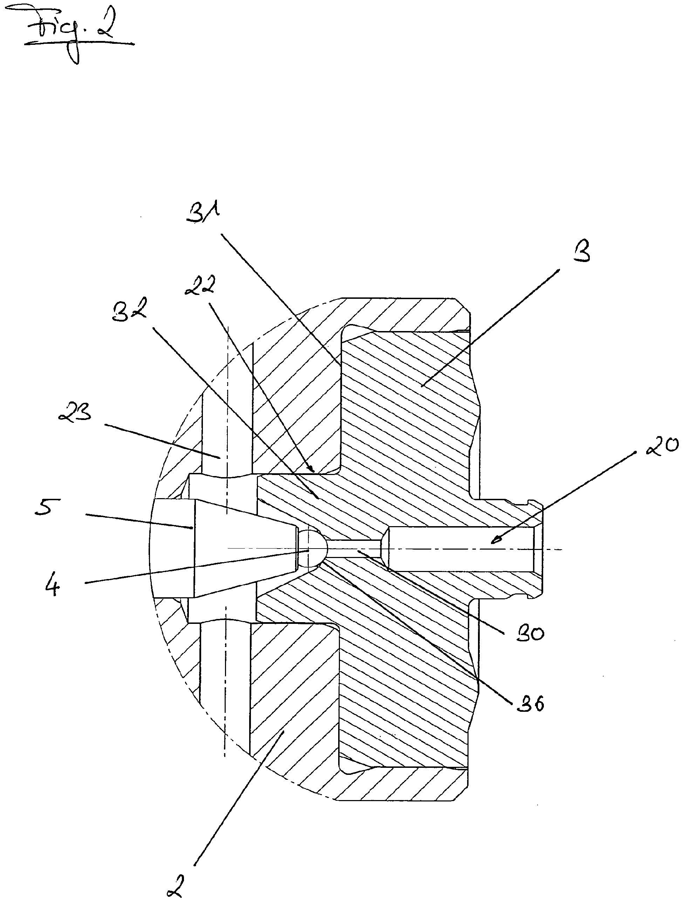

Figur 2 zeigt eine Vergrößerung des Ventilsitzes des Hochdruckregelventils aus Figur 1.

In dieser Darstellung ist deutlich zu erkennen, dass der Ventilsitz 3 ausgehend von einer Grundfläche 31 des Ventilsitzes in Richtung der radial verlaufenden Bohrung 23 des Auslasses 21 verlängert ist. Dieser Fortsatz 32 ist als umlaufender kragenförmiger Fortsatz 32 ausgebildet, der sich ausgehend von der Ventilbohrung 30 trichterförmig erweitert. Der Fortsatz 32 ist annähernd bis zur radial verlaufenden Bohrung 23 geführt, so dass in etwa 9/10 des zwischen der radial verlaufenden Bohrung 23 und der Grundfläche des Ventilsitzes 31 gebildeten Absatzes 22 von dem Fortsatz 32 abgedeckt sind. Auf diese Weise wird erreicht, dass eine Flüssigkeit, die einlassseitig mit hohem Druck ansteht und beim Öffnen des Ventils mit sehr hoher Strömungsgeschwindigkeit an der Dichtkugel 4 vorbeiströmt nicht direkt auf den Absatz 22 gelenkt wird. Auf diese Weise wird eine Erosion des Ventilkörpers 2 in diesem Bereich vermieden. Die Dichtkugel 4 ist über den Ventilstift 5 gegen eine Aufnahme 36, die am auslassseitigen Ende der Ventilbohrung 30 angeordnet ist, pressbar. Durch eine an die Ventilkugel 4 angepasste Aufnahme 36 ist ein besseres Dichtverhalten des Ventilsitzes 3 erreichbar.

Durch eine trichterförmige Aufweiterung des Fortsatzes 32, ausgehend vom auslassseitigen Ende der Ventilbohrung 30 kann eine hubabhängige Kennlinie des freigegebenen Strömungsquerschnittes erreicht werden, so dass eine optimierte Durchfluss- und Druckregelung erreicht werden kann.

Durch eine entsprechende Ausgestaltung der trichterförmigen Aufweitung des Fortsatzes 32 kann außerdem eine Reduktion von Strömungsturbulenzen auf der Ausgangsseite des Hochdruckregelventils 1 erreicht werden.

### Bezugszeichenliste

- 1: Hochdruckregelventil
- 2: Ventilkörper
- 3: Ventilsitz
- 4: Dichtelement
- 5: Betätigungselement
- 6: Betätigungseinrichtung

- 20: Einlass
- 21: Auslass
- 22: Absatz/Erstreckung
- 23: Öffnung/Bohrung

- 30: Ventilbohrung
- 31: Grundfläche
- 32: Fortsatz
- 36: Aufnahme

- 60: Spulenträger
- 61: Spule
- 62: Anker
- 63: Gehäuse
- 64: Anschlusskontakte
- 65: Buchse
- 66: Schweißung
- 68: Druckfeder
- 69: Lagerung

## Patentansprüche

1. Hochdruckregelventil (1) mit
einem Ventilkörper (2) mit einem Einlass (20) und einem Auslass (21), wobei der Auslass (21) durch wenigstens eine radial verlaufende Öffnung (23) in dem Ventilkörper (2) gebildet ist, einem im wesentlichen scheibenförmig ausgebildeten Ventilsitz (3), der an dem Ventilkörper (2) zwischen dem Einlass (20) und dem Auslass (21) angeordnet ist und eine Ventilbohrung (30) aufweist, die Einlass (20) und Auslass (21) verbindet,
einem Dichtelement (4), das an einem Betätigungselement (5) geeignet angeordnet ist, die Ventilbohrung (30) zu verschließen und
einer Betätigungseinrichtung (6), die geeignet ausgebildet ist, das Betätigungselement (5) derart zu bewegen, dass ein Öffnen und Schließen des Ventils bewirkt wird,
wobei der Ventilsitz (3) auslassseitig einen sich von einer Grundfläche (31) axial in Richtung der Öffnung (23) erstreckenden umlaufenden Fortsatz (32) aufweist, so dass beim Öffnen des Ventils (1) ein direktes Anströmen des Ventilkörpers (2) vermieden wird, und wobei der Fortsatz (32) aus gehärtetem Material besteht, wobei der Fortsatz (32) als sich ausgehend von der Ventilbohrung (30) trichterförmig erweiternder Kragen ausgebildet ist, so dass Verwirbelungen in der Strömung reduziert werden,
**dadurch gekennzeichnet, dass**
der Fortsatz (32) eine an das Dichtelement angepasste Ausnehmung (36) zur Aufnahme des Dichtelements (4) aufweist, wobei der Fortsatz (32) wenigstens 9/10 einer Erstreckung (22) zwischen der Grundfläche (31) und der Öffnung (23) abdeckt, so dass ein zwischen der Grundfläche (31) des Ventilsitzes (3) und der Austrittsöffnung (32) liegender Absatz (22) des Ventilkörpers (2) von Materialerosion und von einer damit einhergehenden Schwächung des dort befindlichen Materials verschont wird, wobei der zwischen dem Ventilsitz (3) und der Austrittsöffnung (32) liegende Absatz (22) den Ventilsitz (3) abstützt und der Ventilsitz (3) in den Ventilkörper (2) eingepresst ist.

2. Hochdruckregelventil (1) nach Anspruch 1,
**dadurch gekennzeichnet, dass**
der Fortsatz (32) die komplette Erstreckung zwischen der Grundfläche (31) und der Öffnung (23) abdeckt.

3. Hochdruckregelventil (1) nach einem der vorhergehenden Ansprüche,
**dadurch gekennzeichnet, dass**
das Dichtelement (4) als Dichtkugel ausgebildet ist.

4. Hochdruckregelventil (1) nach einem der vorhergehenden Ansprüche,
**dadurch gekennzeichnet, dass**
das Betätigungselement (5) als Betätigungsstift ausgebildet ist.

## Claims

1. High-pressure regulating valve, comprising:
a valve body (2) having an inlet (20) and an outlet (21), wherein the outlet (21) is formed by at least one radially extending opening (23) in the valve body (2), a substantially disc-shaped valve seat (3), which is arranged on the valve body (2) between the inlet (20) and the outlet (21), a valve bore (30) connecting the inlet (20) and the outlet (21), a sealing element (4) which is suitably arranged on an actuating element (5) to close the valve bore (30), and an actuating device (6) which is suitably configured to move the actuating element (5) in such a way that the valve is opened and closed,
wherein the valve seat (3) has on the outlet side an encircling extension (32) extending axially from a base surface (31) in the direction of the opening (23), so that when the valve (1) is opened a direct flow against the valve body (2) is avoided, and wherein the extension (32) is made of hardened material, wherein the extension (32) is designed as a collar which widens like a funnel, starting from the valve bore (30), so that turbulence in the flow can be reduced,
**characterised in that**
the extension (32) can have a recess (36) adapted to the sealing element to receive the sealing element (4), wherein the extension (32) covers at least 9/10 of a distance (22) between the base surface (31) and the opening (23), so that a shoulder (22) of the valve body (2) located between the base surface (31) of the valve seat (3) and the outlet opening (32) is protected against material erosion and against a concomitant weakening of the material located there, wherein the shoulder (22) located between the valve seat (3) and the outlet opening (32) supports the valve seat (3) and the valve seat (3) is pressed into the valve body (2).

2. High-pressure regulating valve according to claim 1,
**characterised in that**
the extension (32) covers the complete distance between the base surface (31) and the opening (23).

3. High-pressure regulating valve (1) according to one of the preceding claims,
**characterised in that**
the sealing element (4) is configured as a sealing ball.

4. High-pressure regulating valve (1) according to one of the preceding claims,
**characterised in that**
the actuating element (5) is configured as an actuating pin.

## Revendications

1. Soupape de réglage haute pression (1) comprenant :
un corps de soupape (2) ayant une entrée (20) et une sortie (21), la sortie (21) étant formée par au moins une ouverture (23) s'étendant radialement, dans le corps de soupape (2) un siège de soupape (3) réalisé essentiellement en forme de disque qui est monté sur le corps de soupape (2) entre l'entrée (20) et la sortie (21), et un perçage de soupape (30), qui relie l'entrée (20) et la sortie (21), un élément d'étanchéité (4) qui est monté de façon adaptée sur un élément d'actionnement (5) pour fermer le perçage de soupape (30), et
un dispositif d'actionnement (6) qui est réalisé de façon adaptée pour déplacer l'élément d'actionnement (5) pour provoquer l'ouverture et la fermeture de la soupape,
le siège de soupape (3) comportant côté sortie un prolongement (32) périphérique s'étendant axialement dans la direction de l'ouverture (23) à partir d'une surface de base (31) de façon à empêcher, lors de l'ouverture de la soupape (1), un flux arrivant directement sur le corps de soupape (2), le prolongement (32) étant réalisé en un matériau durci, et étant réalisé sous la forme d'une collerette s'élargissant en forme d'entonnoir à partir du perçage de soupape (30) de façon à réduire les turbulences du flux,
**caractérisée en ce que**
le prolongement (32) comporte un évidement (36) de réception de l'élément d'étanchéité (4) adapté à cet élément d'étanchéité, et recouvrant au moins les 9/10^{ème} de l'extension (22) entre la surface de base (31) et l'ouverture (23), de sorte qu'un talon (22) du corps de soupape (2) situé entre la surface de base (31) du siège de soupape (3) et l'ouverture de sortie (32) soit protégé vis-à-vis de l'érosion de matériau et d'un affaiblissement inhérent à celle-ci du matériau qui s'y trouve, le talon (22) situé entre le siège de soupape (3) et l'ouverture de sortie (32) supportant le siège de soupape (3) et enfonçant à fond le siège de soupape (3) dans le corps de soupape (2).

2. Soupape de régulation haute pression (1) conforme à la revendication 1,
**caractérisée en ce que**
le prolongement (32) recouvre la totalité de l'extension entre la surface de base (31) et l'ouverture (23).

3. Soupape de régulation haute pression (1) conforme à l'une des revendications précédentes,
**caractérisée en ce que**
l'élément d'étanchéité (4) est réalisé sous la forme d'une bille d'étanchéité.

4. Soupape de régulation haute pression (1) conforme à l'une des revendications précédentes,
**caractérisée en ce que**
l'élément d'actionnement (5) est réalisé sous la forme d'une broche d'actionnement.
